(19) Europäisches Patentamt
European Patent Office
Office européen des brevets

(11) **EP 4 484 935 A1**

(12) **EUROPEAN PATENT APPLICATION**
published in accordance with Art. 153(4) EPC

(43) Date of publication:
**01.01.2025   Bulletin 2025/01**

(21) Application number: **22928615.8**

(22) Date of filing: **24.02.2022**

(51) International Patent Classification (IPC):
**G01N 21/90** (2006.01)

(52) Cooperative Patent Classification (CPC):
**G01N 21/90**

(86) International application number:
**PCT/JP2022/007601**

(87) International publication number:
**WO 2023/162087 (31.08.2023 Gazette 2023/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NEC Corporation**
**108-8001 Tokyo (JP)**

(72) Inventors:
• **YAMAGUCHI Masahiro**
**Tokyo 108-8001 (JP)**
• **YACHIDA Shoji**
**Tokyo 108-8001 (JP)**

(74) Representative: **Betten & Resch**
**Patent- und Rechtsanwälte PartGmbB**
**Maximiliansplatz 14**
**80333 München (DE)**

(54) **IMAGE PROCESSING DEVICE, IMAGE PROCESSING METHOD, AND STORAGE MEDIUM**

(57)    An image processing device that can detect detection targets accumulated on a bottom surface inside a transparent container or detection targets accumulated at a medium surface inside a transparent container is provided. Multiple images capturing a detection target accumulated at a bottom surface of a transparent container or a detection target accumulated at a surface at which a medium enclosed inside a transparent container contacts another medium inside the transparent container, the images being captured while rotating the transparent container, are compared to determine, among candidate regions for being the detection target appearing in the images, candidate regions that move in a movement direction in accordance with the rotation. The presence or absence of the detection target is determined by using first determination results obtained by using a first learning model and image information for the candidate regions that move in the movement direction in accordance with the rotation to determine whether or not the candidate regions are the detection target, and second determination results obtained by using a second learning model and information indicating a chronological change in the candidate regions that move in the movement direction in accordance with the rotation to determine whether or not the candidate regions are the detection target.

FIG. 1

**Description**

TECHNICAL FIELD

The present invention pertains to an image processing device, an image processing method, and a storage medium.

BACKGROUND ART

Technologies for detecting contamination with detection targets such as foreign matter enclosed in transparent containers have been disclosed. For example, in Patent Document 1, an inspection region is narrowed within an image by means of image processing, and air bubbles and foreign matter in the region are distinguished by using the shapes of the air bubbles. In Patent Document 1, when determining whether a liquid sealed inside a semi-transparent container such as a syringe is contaminated with foreign matter, the presence or absence of foreign matter in the liquid is distinguished by vibrating or rotating the container to put the foreign matter in a suspended state, and by recognizing the suspended foreign matter and air bubbles generated by the vibrations or rotations.

Patent Document 2 discloses an example of a method for detecting contaminants in a liquid. With the method for detecting contaminants in a liquid in Patent Document 2, the amounts of light from a transmission light source and from a reflection light source are relatively adjusted with respect to foreign matter suspended in a container, and foreign matter in the liquid is detected by the differences in brightness between air bubbles, which appear with high brightness, and foreign matter, which appear with low brightness.

Patent Document 3 discloses technology for detecting foreign matter by using feature quantities obtained from differential images of foreign matter suspended by rotation. In Patent Document 3, two sets of images are selected with a prescribed time interval therebetween, and a difference image is generated. Additionally, in Patent Document 3, edge pixels are extracted by performing a differential process on the difference image, and the extracted edges are grouped to extract individual suspension differential images. Additionally, in Patent Document 3, feature quantities such as distributions and shapes of differential values are determined from the grouped individual suspension differential images, and foreign matter in the liquid is detected by distinguishing between foreign matter and air bubbles by these feature quantities.

Patent Document 4 discloses technology pertaining to an outer inspection method for transparent films wherein an outer inspection regarding the presence or absence of defects such as foreign matter or air bubbles is performed by implementing computer image processing on images of transparent films with low reflectance.

CITATION LIST

Patent Literature

[Patent Document 1] Japanese Unexamined Patent Application, First Publication No. 2013-44688

[Patent Document 2] Japanese Unexamined Patent Application, First Publication No. Hei 11-125604

[Patent Document 3] Japanese Unexamined Patent Application, First Publication No. 2004-354100

[Patent Document 4] Japanese Unexamined Patent Application, First Publication No. 2009-264915

SUMMARY OF THE INVENTION

Problems to be solved by the Invention

In the case in which the detection targets such as foreign matter contaminating a medium in a transparent container as mentioned above accumulate in curved portions such as the bottom surfaces of transparent containers or on medium surfaces (i.e., liquid surfaces) inside transparent containers, there was a problem in that the reflection of light due to the curvature at the bottom surfaces of the transparent containers and in the shapes of the medium surfaces affected the detection of small detection targets, making such detection difficult.

Therefore, an objective of the present invention is to provide an image processing device, an image processing method, and a storage medium that solve the problems mentioned above.

Means for Solving the Problems

According to a first aspect of the present invention, an image processing device: compares multiple images capturing a detection target inside a transparent container, the images being captured while rotating the transparent container, and determines, among candidate regions for being the detection target appearing in the images, candidate regions that move in a movement direction in accordance with the rotation; and determines a presence or absence of the detection target by using first determination results obtained by using a first learning model and image information for the candidate regions that move in the movement direction in accordance with the rotation to determine whether or not the candidate regions are the detection target, and second determination results obtained by using a second learning model and information indicating a chronological change in the candidate regions that move in the movement direction in accordance with the rotation to determine whether or not the candidate regions are the detection target.

According to a second aspect of the present invention, an image processing method involves: comparing multiple images capturing a detection target inside a transparent container, the images being captured while rotating the transparent container, and determining, among candidate regions for being the detection target appearing in the images, candidate regions that move in a movement direction in accordance with the rotation; and determining a presence or absence of the detection target by using first determination results obtained by using a first learning model and image information for the candidate regions that move in the movement direction in accordance with the rotation to determine whether or not the candidate regions are the detection target, and second determination results obtained by using a second learning model and information indicating a chronological change in the candidate regions that move in the movement direction in accordance with the rotation to determine whether or not the candidate regions are the detection target.

According to a third aspect of the present invention, a storage medium stores a program for making a computer in an image processing device execute: a process of comparing multiple images capturing a detection target inside a transparent container, the images being captured while rotating the transparent container, and determining, among candidate regions for being the detection target appearing in the images, candidate regions that move in a movement direction in accordance with the rotation; and a process of determining a presence or absence of the detection target by using first determination results obtained by using a first learning model and image information for the candidate regions that move in the movement direction in accordance with the rotation to determine whether or not the candidate regions are the detection target, and second determination results obtained by using a second learning model and information indicating a chronological change in the candidate regions that move in the movement direction in accordance with the rotation to determine whether or not the candidate regions are the detection target.

Advantageous Effects of Invention

According to the present invention, detection targets that have accumulated in curved portions inside transparent containers and on medium surfaces inside transparent containers can be more accurately detected.

BRIEF DESCRIPTION OF THE DRAWINGS

[FIG. 1] FIG. 1 is a first perspective view of a foreign matter detection device according to an embodiment of the present invention.
[FIG. 2] FIG. 2 is a second perspective view of a foreign matter detection device according to an embodiment of the present invention.
[FIG. 3] FIG. 3 is a third perspective view of a foreign matter detection device according to an embodiment of the present invention.
[FIG. 4] FIG. 4 is a first diagram indicating an example of the appearance of foreign matter inside a transparent container according to an embodiment of the present invention.
[FIG. 5] FIG. 5 is a second diagram indicating an example of the appearance of foreign matter inside a transparent container according to an embodiment of the present invention.
[FIG. 6] FIG. 6 is a hardware configuration diagram of an image processing device according to an embodiment of the present invention.
[FIG. 7] FIG. 7 is a first diagram indicating functional blocks in an image processing device according to an embodiment of the present invention.
[FIG. 8] FIG. 8 is a second diagram indicating functional blocks in an image processing device according to an embodiment of the present invention.
[FIG. 9] FIG. 9 is a third diagram indicating functional blocks in an image processing device according to an embodiment of the present invention.

[FIG. 10] FIG. 10 is a first diagram indicating the processing flow in an image processing device according to an embodiment of the present invention.

[FIG. 11] FIG. 11 is a second diagram of the processing flow in an image processing device according to an embodiment of the present invention.

[FIG. 12] FIG. 12 is a first diagram indicating a summary of the processing in an image processing device according to an embodiment of the present invention.

[FIG. 13] FIG. 13 is a second diagram indicating a summary of the processing in an image processing device according to an embodiment of the present invention.

[FIG. 14] FIG. 14 is a third diagram indicating a summary of the processing in an image processing device according to an embodiment of the present invention.

[FIG. 15] FIG. 15 is a fourth diagram indicating a summary of the processing in an image processing device according to an embodiment of the present invention.

[FIG. 16] FIG. 16 is a fourth perspective view of a foreign matter detection device according to an embodiment of the present invention.

[FIG. 17] FIG. 17 is a fourth diagram indicating functional blocks in an image processing device according to an embodiment of the present invention.

[FIG. 18] FIG. 18 is a diagram indicating the processing flow in an image processing device according to a second embodiment of the present invention.

[FIG. 19] FIG. 19 is a diagram indicating a summary of the processing in an image processing device according to a second embodiment of the present invention.

[FIG. 20] FIG. 20 is a diagram indicating the minimum configuration of the image processing device according to the present invention.

[FIG. 21] FIG. 21 is a diagram indicating the processing flow in the image processing device with the minimum configuration in the present invention.


EXAMPLE EMBODIMENT

Hereinafter, embodiments of the present invention will be explained in detail with reference to the drawings.

[First Embodiment]

[Explanation of Structure]

First, an embodiment of the invention will be explained in detail with reference to the drawings.

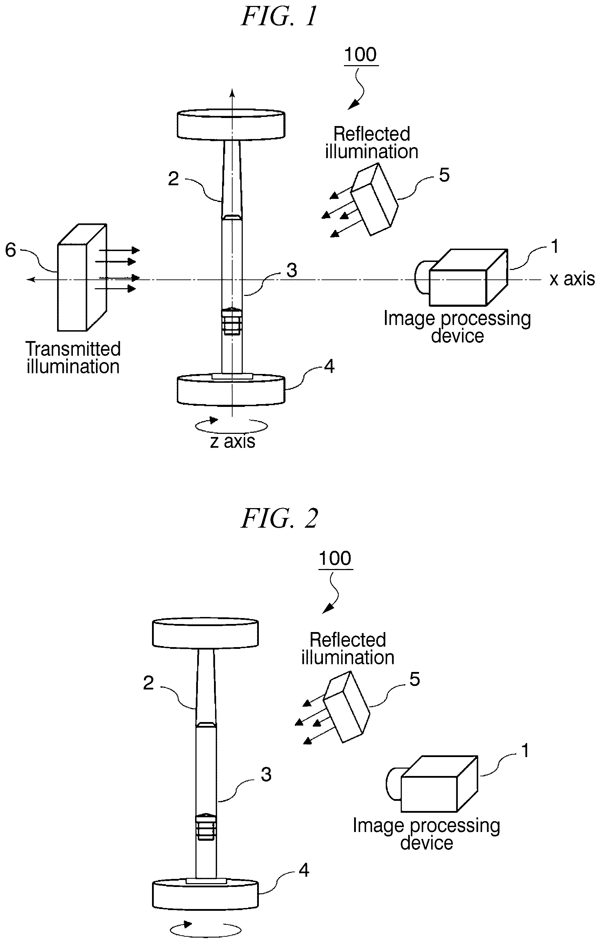

FIG. 1 is a first perspective view of a foreign matter detection device 100 including an image processing device 1 of the present invention. The foreign matter detection device 100, as indicated in FIG. 1, is composed of an image processing device 1, a transparent container 2 that is to be a detection target, a rotation device 4 for rotating the transparent container 2, and reflected illumination 5 and transmitted illumination 6 for illuminating a liquid 3 inside the transparent container 2. The liquid 3 is enclosed inside the transparent container 2.

In the first embodiment, the transparent container 2 has a cylindrical shape, and the medium enclosed inside the transparent container is a liquid 3. Foreign matter that is a detection target has accumulated on the bottom surface of the transparent container 2, and the image processing device 1 determines the presence or absence of foreign matter based on images that include foreign matter accumulated on the bottom surface of transparent container 2. The foreign matter that is the detection target may be accumulated at a liquid surface of the liquid 3 inside the transparent container 2, and the image processing device 1 may determine the presence or absence of foreign matter based on images that include foreign matter accumulated at a liquid surface of the liquid 3. The bottom surface of the transparent container 2 is one example of a curved portion of a wall surface of the transparent container 2. The liquid surface of the liquid 3 inside the transparent container 2 is one embodiment of a surface at which a medium (liquid 3) enclosed inside the transparent container 2 contacts another medium (air) inside the transparent container 2. The image processing device 1 determines, in particular, detection targets in images capturing the detection targets accumulated in curved portions of wall surfaces of the transparent container 2 or detection targets accumulated at surfaces where a medium enclosed inside the transparent container 2 contacts another medium inside the transparent container. The media enclosed inside the transparent container 2 is not limited to the liquid 3. Additionally, the curved portions of wall surfaces inside the transparent container 2 are not limited to the bottom surface. Additionally, the surface at which the liquid 3 enclosed inside the transparent container 2 contacts another medium inside the transparent container 2 is not limited to the liquid surface of the liquid 3. The image processing device 1 may determine the types (foreign matter, air bubbles, etc.) of the detection targets. The image processing device 1 may detect detection targets accumulated in a medium other than a liquid enclosed inside the transparent container 2.

In other words, the image processing device 1 may detect the detection targets from images capturing the detection targets accumulated on the bottom surface of the transparent container 2 or the detection targets accumulated at a surface at which a medium enclosed inside the transparent container 2 contacts another medium inside the transparent container 2. The image processing device 1 may detect the detection targets from only images capturing detection targets accumulated on the bottom surface of the transparent container 2, or may detect the detection targets from only images capturing detection targets accumulated at the liquid surface of the liquid 3 in the transparent container 2. The image processing device 1 may detect the detection targets in images capturing the detection targets suspended within the liquid 3 in the transparent container 2.

The rotation device 4 is a device that grips the bottom surface with the cylindrical transparent container 2 oriented vertically, and that rotates the transparent container 2 so that the axis of rotation (z axis) is at a center aligned with the center of the bottom surface. The detection targets that are suspended in the liquid 3 enclosed inside the transparent container 2 rotate about the axis of rotation as the transparent container 2 is rotated. In the present embodiment, the image processing device 1 is provided with an image capture device 10. The image capture device 10 is installed at a position from which the detection targets can be captured, with the image capture direction fixed on an image capture axis (x axis) orthogonal to the z axis. While the rotation device 4 is rotating the transparent container 2, the image processing device 1 controls the image capture device 10 to capture images of the detection targets, and can obtain multiple consecutive images with angles of view in which the detection targets appear. While the image capture device 10 is capturing images, the relationship between the z axis and the x axis is maintained. As a result thereof, the image processing device 1 acquires multiple images containing the detection targets, the positions of which change as the rotation device 4 is rotated. In the example in FIG. 1, the transmitted illumination 6 and the pair of the image processing device 1 provided with the image capture device 10 and the reflected illumination 5 are located on mutually opposite sides of an imaginary plane including the axis of rotation (z axis).

FIG. 2 is a second perspective view of a foreign matter detection device 100 including the image processing device 1 of the present invention. Although FIG. 1 shows an example in which the foreign matter detection device 100 is provided with reflected illumination 5 and transmitted illumination 6, the foreign matter detection device 100 need not be provided with the transmitted illumination 6. In the example in FIG. 2, the reflected illumination 5 and the image processing device 1 provided with the image capture device 10 are both located on one side of an imaginary plane including the axis of rotation (z axis). When the reflected illumination 5 illuminates the liquid 3 in this state, the detection targets such as foreign matter reflect light, and thus often appear with higher brightness than their surroundings. In this case, the image processing device 1 determines detection targets such as foreign matter from regions in which the brightness appears higher than the surroundings.

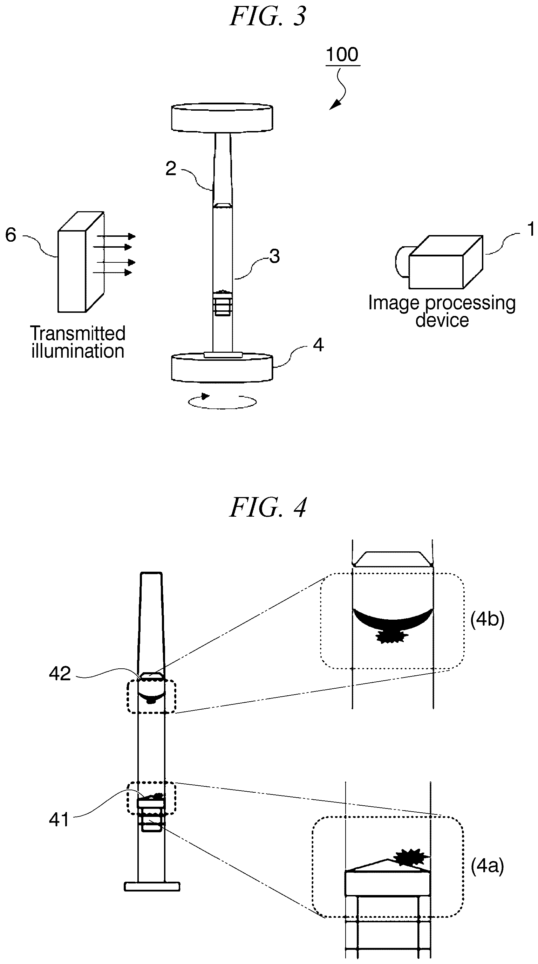

FIG. 3 is a third perspective view of a foreign matter detection device 100 including the image processing device 1 of the present invention. Although FIG. 1 shows an example in which the foreign matter detection device 100 is provided with reflected illumination 5 and transmitted illumination 6, the foreign matter detection device 100 need not be provided with the reflected illumination 5. In the example in FIG. 3, the reflected illumination 5 and the image processing device 1 provided with the image capture device 10 are located on mutually opposite sides of an imaginary plane including the axis of rotation (z axis). When the transmitted illumination 6 illuminates the liquid 3 in this state, the detection targets such as foreign matter block light and thus, in images generated by the image capture device 10 capturing the liquid from the side of the imaginary plane opposite to the transmitted illumination 6, the detection targets often appear in the images with lower brightness than their surroundings. In this case, the image processing device 1 determines detection targets such as foreign matter from regions in which the brightness appears lower than the surroundings.

FIG. 4 is a first diagram indicating an example of the appearance of foreign matter inside a transparent container.

FIG. 4 indicates a first example and a second example of states in which there is foreign matter in the liquid 3 when an image of the transparent container 2 has been captured by the image capture device 10 in the image processing device 1. When there is a detection target near the bottom surface 41 of the transparent container 2, the image capture device 10 generates an image 4a capturing the detection target on the bottom surface 41. When there is a detection target near the bottom surface 41 of the transparent container 2, the image capture device 10 generates an image 4b capturing the detection target at the liquid surface 42.

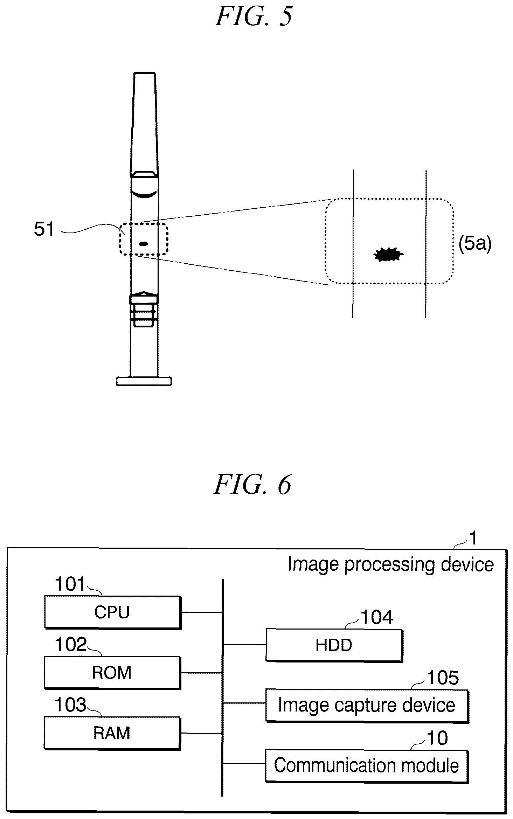

FIG. 5 is a second diagram indicating an example of the appearance of foreign matter inside a transparent container.

FIG. 5 indicates a third example of a state in which there is foreign matter in the liquid 3 when an image of the transparent container 2 has been captured by the image capture device 10 in the image processing device 1. When a detection target is suspended in the liquid 3 in the transparent container 2, the image capture device 10 may generate an image 5a in which the suspended detection target is captured. The image processing device 1 may detect the detection target based on the image 5a.

In this case, when a detection target is suspended in the liquid 3 as in the third example (image 5a) in a state in which there is foreign matter in the liquid 3, the brightness value in regions other than the detection target within the image region can easily be made constant, as illustrated in image 5a, by controlling the illumination environment, making the region of the detection target more easily discernible. In the third example (image 5a), in addition thereto, the suspended detection target gradually descends in the direction of gravity, and the detection target can be easily detected by sensing the movement thereof. In contrast therewith, there is a requirement to accurately detect detection targets accumulated at liquid surfaces or near the bottom surfaces of transparent containers 2, as indicated in the first example (image 4a) and the second example (image 4b). In the first example (image 4a) and the second example (image 4b), the liquid surface and curved portions of the wall surfaces of the transparent container 2, such as the bottom surface regions, appear in the image, so that the brightness values of the regions in the image other than the detection targets are not constant and it becomes difficult to make the region of the detection target discernible. Additionally, since the detection targets accumulate on the bottom surface and near the liquid surface, detection by descending movement is not possible. For this reason, the image processing device 1 has both a function for allowing the regions of detection targets to be made discernible even near the liquid surface or the bottom surface, and a function for detecting accumulated detection targets by rotational motion of the container.

FIG. 6 is a hardware configuration diagram of an image processing device according to the present embodiment.

The image processing device 1 illustrated in this drawing is a computer provided with hardware such as a CPU (Central Processing Unit) 101, a ROM (Read-Only Memory) 102, a RAM (Random Access Memory) 103, an HDD (Hard Disk Drive) 104, a communication module 105, and a database 106. Additionally, the image processing device 1 is provided with an image capture device 10.

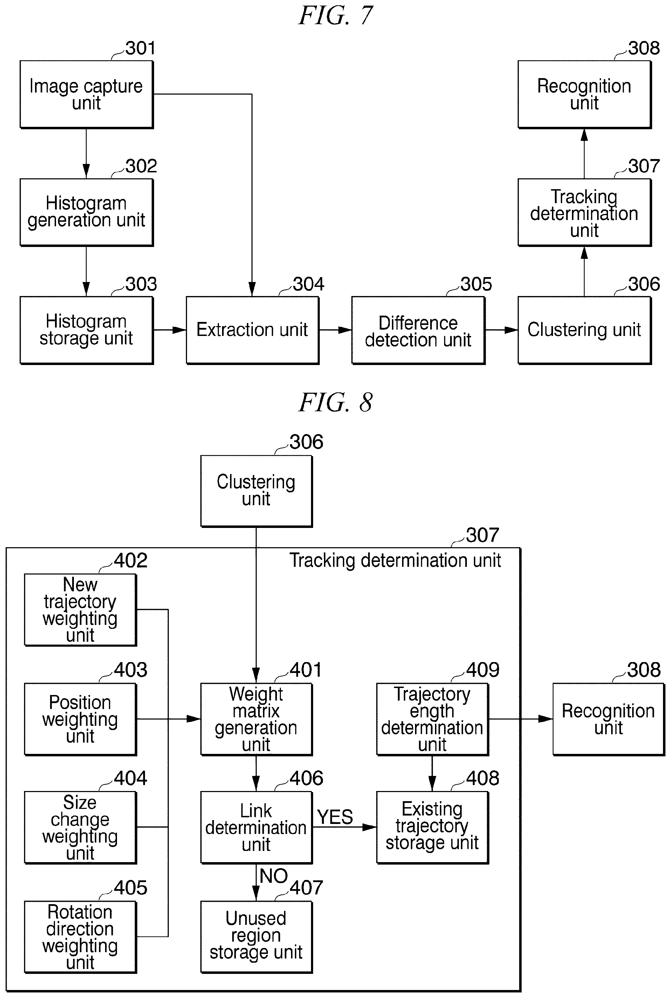

FIG. 7 is a first diagram indicating functional blocks of the image processing device.

As indicated in FIG. 7, the image processing device 1 executes a prestored image processing program. As a result thereof, the image processing device 1 provides the respective functions of an image capture unit 301, a histogram generation unit 302, a histogram storage unit 303, an extraction unit 304, a difference detection unit 305, a clustering unit 306, a tracking determination unit 307, and a recognition unit 308.

The image capture unit 301 controls the image capture device 10 to acquire images generated by the image capture device 10 capturing images.

The histogram generation unit 302 generates a reference histogram indicating the frequency of occurrence of each pixel value among the respective pixels in multiple images (1, 2, ..., $N$ frames) prepared in advance by capturing images while the transparent container is rotating.

The histogram storage unit 303 stores the reference histogram that was generated in advance by the histogram generation unit 302.

The extraction unit 304 compares the frequencies of occurrence (histogram) of brightnesses in the pixels of one image selected from among multiple images (1, 2, ..., $N$ frames) acquired by sequentially capturing images while rotating the transparent container 2 with the rotation device 4 based on comparisons with the reference histogram stored in the histogram storage unit 303, and extracts candidate regions for being detection targets, such as foreign matter and air bubbles, in the one selected image.

The difference detection unit 305 sequentially compares pixel values of detection target candidate regions extracted from multiple images with successive image capture timings, and performs a process of eliminating, from being detection targets, the candidate regions that have not moved.

The clustering unit 306 clusters, as single candidate regions, groups of adjacent pixels among the pixels remaining as candidate regions.

The tracking determination unit 307 identifies, in the respective pixels of multiple successive images with sequentially different image capture timings, successive associated regions that move in accordance with the rotation of the transparent container in the regions (detection windows) of clustered candidate regions.

The recognition unit 308 recognizes detection targets by using first determination results obtained by using a first learning model and image information for candidate regions that move in a movement direction in accordance with the rotation to determine whether or not the candidate regions are the detection target, and second determination results obtained by using a second learning model and information indicating a chronological change in the candidate regions that move in the movement direction in accordance with the rotation to determine whether or not the candidate regions are the detection target. The recognition of the detection target is one embodiment of the process for determining the presence or absence of detection targets.

FIG. 8 is a second diagram indicating functional blocks of the image processing device.

The functional blocks indicated in FIG. 8 indicate specific functional blocks in the tracking determination unit 307. The tracking determination unit 307 provides the functions of a weight matrix generation unit 401, a new trajectory weighting unit 402, a position weighting unit 403, a size change weighting unit 404, a rotation direction weighting unit 405, a link determination unit 406, an unused region storage unit 407, an existing trajectory storage unit 408 and a trajectory length determination unit 409.

The weight matrix generation unit 401 generates a weight matrix M for calculating the relationship between the respective tracking results for detection target candidate regions up to the image of the $(N-1)$-th frame and the respective detection target candidate regions in the image of the *N*-th frame based on weighting information obtained from the new trajectory weighting unit 402, the position weighting unit 403, the size change weighting unit 404, and the rotation direction weighting unit 405.

The new trajectory weighting unit 402, the position weighting unit 403, the size change weighting unit 404, and the rotation direction weighting unit 405 each determine weight information indicating whether there is a strong or weak correlation between the respective tracking results of detection target candidate regions up to the image of the (*N* - 1)-th frame at different viewpoints and the respective detection target candidate regions in the image of the N-th frame. Details regarding the weighting units will be described below.

The link determination unit 406 uses the weight matrix *M* and an algorithm for solving the assignment problem, such as the Hungarian algorithm, to assign the respective detection target candidate regions in the image of the *N*-th frame to the respective tracking results of the detection target candidate regions up to the image of the *(N*- 1)-th frame.

The unused region storage unit 407 stores candidate regions that were not assigned to tracking results by the link determination unit 406.

The existing trajectory storage unit 408 stores, for the respective frames, in an associated manner, trajectory recognition information and the respective candidate regions that have been assigned tracking results by the link determination unit 406.

The trajectory length determination unit 409 identifies, as detection target trajectories, trajectories that have been linked to lengths equal to or greater than a threshold value among the trajectory information stored in the existing trajectory storage unit 408.

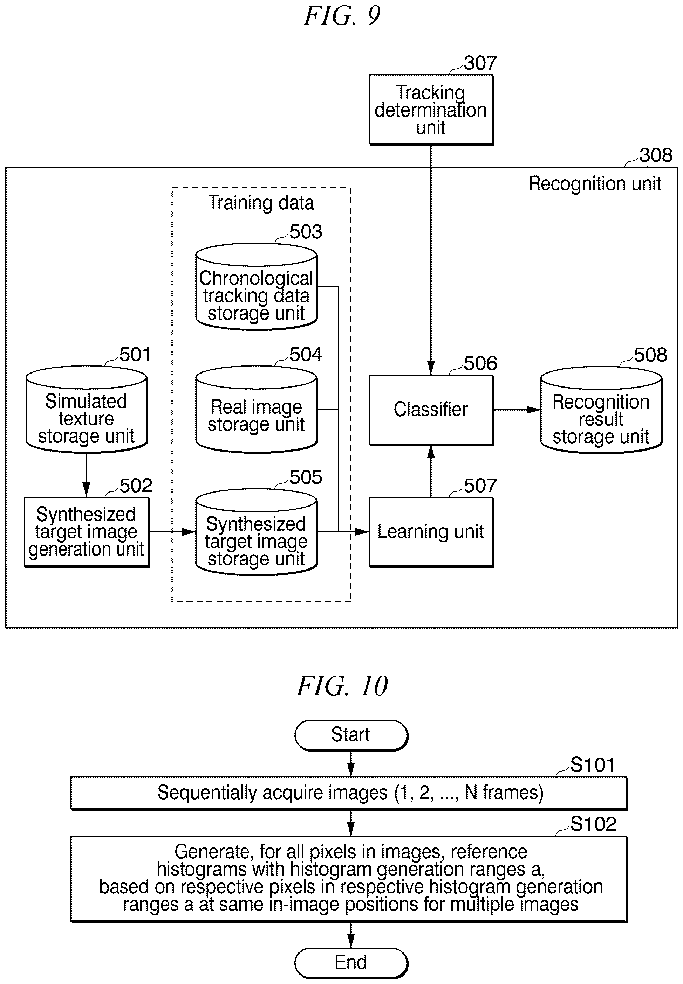

FIG. 9 is a third diagram indicating functional blocks of the image processing device.

The functional blocks indicated in FIG. 9 indicate specific functional blocks in the recognition unit 308.

The recognition unit 308 provides the functions of a simulated texture storage unit 501, a synthesized target image generation unit 502, a chronological tracking data storage unit 503, a real image storage unit 504, a synthesized target image storage unit 505, a classifier 506, a learning unit 507, and a recognition result storage unit 508.

The simulated texture storage unit 501 stores simulated textures.

The synthesized target image generation unit 502 generates synthesized target images simulating detection targets by cutting out simulated textures in random shapes and overlaying them at random positions and angles on images.

The chronological tracking data storage unit 503 stores chronological data of tracking results obtained when tracking detection targets.

The real image storage unit 504 stores multiple images of different shapes and sizes, the images being of actual detection targets such as foreign matter and air bubbles.

The synthesized target image storage unit 505 stores synthesized target images generated by the synthesized target image generation unit 502.

The classifier 506 recognizes detection targets such as foreign matter and air bubbles by using a learning model generated by the learning unit 507. The classifier 506 specifically outputs a three-value classification determination result including foreign matter, air bubbles, and erroneous detection of other regions.

The learning unit 507 generates a learning model for recognizing detection targets by using determination results from the tracking determination unit 307.

The recognition result storage unit 508 stores determination results from the classifier 506.

First, the image processing device 1 generates, in advance, a first learning model and a second learning model. The first learning model is a learning model for recognizing whether or not a detection target candidate region moving in a movement direction in accordance with the rotation of the transparent container 2 is a detection target based on images (1, 2, ..., *N* frames) generated by repeatedly capturing images while the transparent container 2 is rotating. Additionally, the second learning model is a learning model for recognizing whether or not a detection target candidate region moving in a movement direction in accordance with the rotation of the transparent container is a detection target based on information regarding each of the images (1, 2, ..., *N* frames) indicating the chronological change in the candidate regions moving in the movement direction in accordance with the rotation. The image processing device 1 uses these two learning models, i.e., the first learning model and the second learning model, to recognize detection targets.

Specifically, the learning unit 507 performs a first machine learning process using, as correct data, real images in which foreign matter and air bubbles, which are actual detection targets, appear, and simulated images of those detection targets, which have been prepared as training data. The real images are recorded in the real image storage unit 504. The simulated images are recorded in the synthesized target image storage unit 505. An example of a real image or a simulated image is image information having the center of a detection target region at the center of the image.

The learning unit 507 performs the machine learning process using the real images and the simulated images recorded in these storage units. The simulated images are images simulating detection targets such as foreign matter and air bubbles generated by the synthesized target image generation unit 502 using textures (image color samples, etc.) recorded in the simulated texture storage unit 501, the images being prepared by cutting out textures in random shapes and overlaying them at random positions and angles on images. The learning unit 507, for example, by a first machine learning process, generates a first learning model that includes information on parameters such as weights, such as a neural network in which images are input and which outputs results indicating that there is a detection target when a detection target indicated by the real images or the simulated images appears in those images. The classifier 506 outputs information indicating that there is a detection target in the case in which a detection target appears in an image when the image is input to a neural network generated by using the first learning model. Additionally, the first learning model may be information making up a neural network that identifies detection target recognition information. Thus, the learning unit 507 generates a first learning model that can robustly detect even detection targets such as unknown foreign matter, using real images indicating the actual appearance of detection targets by images and simulated images prepared by synthesizing textures.

Additionally, the learning unit 507 generates, as training data, chronological tracking data based on multiple image frames capturing detection targets actually contained in a rotating transparent container 2, and uses this data to perform a second machine learning process. The chronological tracking data is recorded in the chronological tracking data storage unit 503. The chronological tracking data may be, for example, information such as identifiers, positions (in-image coordinates), and numbers of pixels indicating detection target regions in chronologically successive images, and motion amounts and motion vectors based on variations in the positions of those regions in the successive image frames. The learning unit 507, for example, by the second machine learning process, generates a second learning model which, when respective chronological tracking data for images of multiple frames captured in chronological order are input, outputs results indicating that the respective trajectories determined to be detection target candidate regions in the images of the respective frames are trajectories of detection targets. The second learning model is information from training results that include information on parameters such as weights in a neural network, etc. When chronological tracking data relating to images of multiple frames is input to a neural network generated by using the second learning model, the classifier 506 outputs information indicating that a trajectory is a detection target if the respective trajectories determined to be detection target candidate regions in the images of the respective frames are trajectories of a detection target.

Furthermore, the classifier 506 uses the first learning model and the second learning model, which are used for determining whether there are detection targets by means of different information, to determine, from images, whether they include detection targets. Additionally, the classifier 506 may use the first learning model and the second learning model, which are used for determining whether there are detection targets by means of different information, to identify detection target identifiers from images. Since the first learning model and the second learning model are used to identify detection targets, the detection targets can be recognized with higher accuracy. Due to the classifier 506 using the first learning model and the second learning model to determine whether detection targets are included in images, it is possible to perform three-value classification determination including whether a detection target is foreign matter or an air bubble, or an erroneous detection of a background other than the above. The image processing device 1 may use the first learning model and the second learning model to separately recognize multiple detection targets as foreign matter that are detection targets.

FIG. 10 is a first diagram indicating the processing flow in the image processing device according to the present embodiment.

Next, the process by which the image processing device 1 generates a reference histogram will be explained.

First, the image capture direction and the angle of view of the image capture device 10 are fixed. The image capture device 10, as one example, captures images including the vicinity of the bottom surface of a transparent container 2. In this state, the rotation device 4 rotates the transparent container 2 about the Z axis. The rotational motion of the transparent container 2 is of a constant velocity. As a result thereof, in the images generated by the image capture device 10, the same location on the transparent container 2 appears with a regular periodicity. The image capture unit 301 in the image processing device 1 controls the image capture device 10 so as to continuously capture images. When generating the reference histogram, it is assumed that there are no detection targets (foreign matter, air bubbles, etc.) inside the transparent container 2.

The image capture unit 301 sequentially acquires the images (1, 2, ..., $N$ frames) generated by the image capture device 10 (step S101). The image capture device 10 may generate a number of images, such as ten images, with each rotation of the transparent container 2. The histogram generation unit 302 acquires the multiple images (1, 2, ..., $N$ frames). The histogram generation unit 302 sets, in each of the multiple images, rectangular histogram generation ranges $a$ including one reference pixel and surrounding pixels in the image, while shifting the reference pixel one at a time. As one example, the histogram generation range $a$ may be a range of five pixels vertically and five pixels horizontally.

The histogram generation unit 302 generates reference histograms of the histogram generation ranges $a$ based on the respective pixels of the respective histogram generation ranges $a$ at the same in-image positions in multiple consecutive images acquired chronologically from the time 0 to the time $t$ (step S102). The histogram generation unit 302 generates reference histograms for all of the pixels in the images. The reference histogram, as one example, indicates pixel values of brightness or one of 255 tones of color information such as RGB information on the vertical axis and indicates the occurrence frequency on the horizontal axis. The image processing device 1 generates the reference histograms using images generated while the transparent container 2 rotates multiple times. The histogram generation unit 302 records the generated reference histogram in the histogram storage unit 303. The above-mentioned process corresponds to a process whereby the histogram generation unit 302, when an image region captured by the image capture unit 301 is represented by $\Omega$, prepares reference histograms $h\_i \in \Omega$ in which each pixel $i \in \Omega$ is saved from the time 0 to the time $t$. The histogram storage unit 303 stores the reference histograms $h\_i \in \Omega$ of the respective pixels obtained by the histogram generation unit 302.

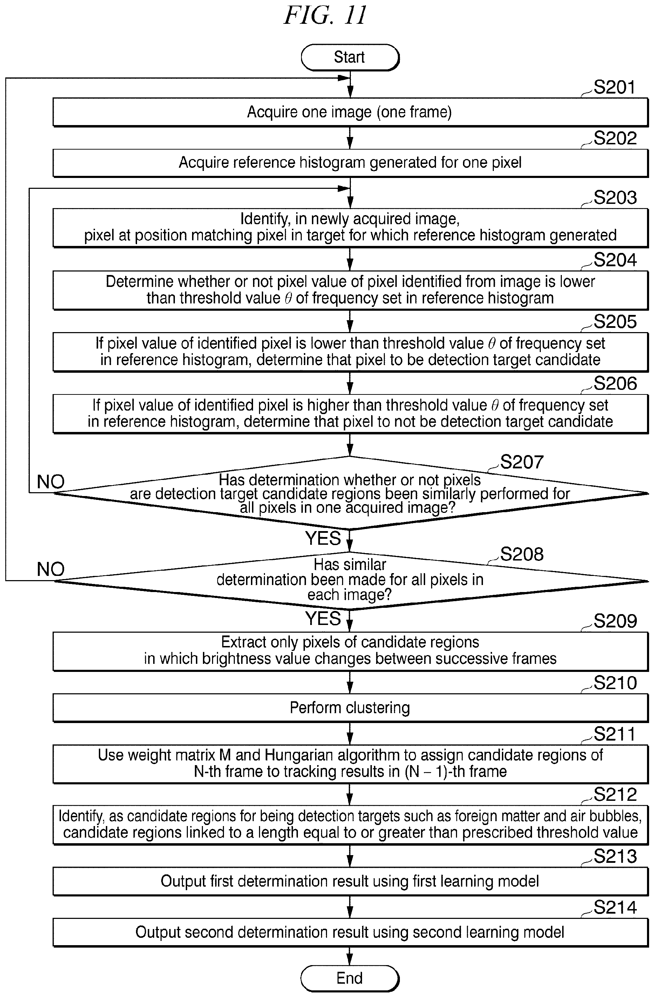

FIG. 11 is a third diagram indicating the processing flow in the image processing device according to the present embodiment.

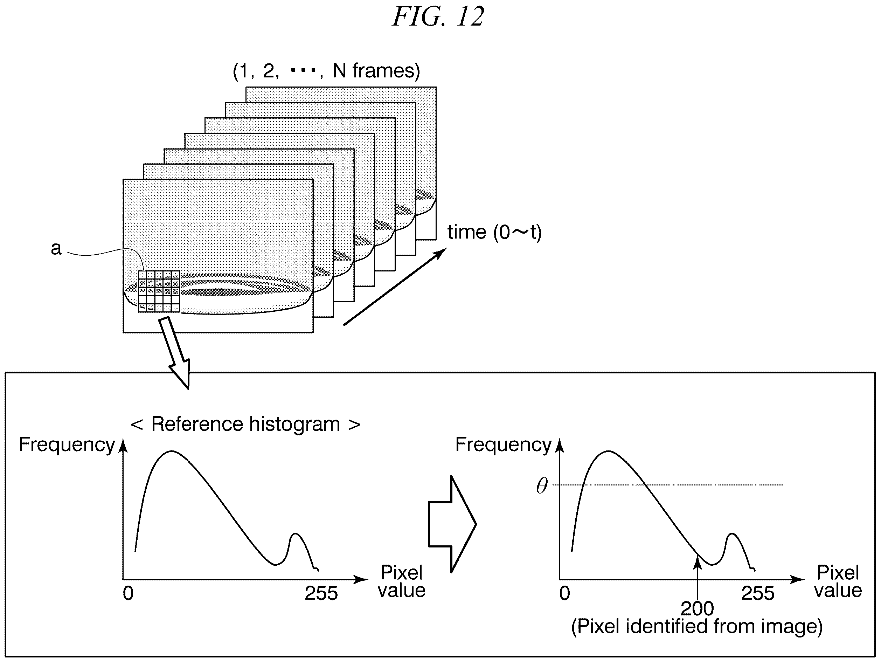

FIG. 12 is a first diagram indicating a summary of the processing in the image processing device according to the present embodiment.

Next, the process performed when the image processing device 1 actually recognizes a detection target will be explained.

As when generating the reference histogram, the rotation device 4 rotates the transparent container 2. In this state, the image capture unit 301 of the image processing device 1 controls the image capture device 10 so as to continuously capture images. The image capture unit 301 acquires one image (one frame) generated by the image capture device 10 (step S201). The extraction unit 304 acquires a reference histogram generated for one pixel among the reference histograms stored in the histogram storage unit 303 (step S202). The extraction unit 304 uses the reference histogram stored in the histogram storage unit 303 to identify, in images newly obtained from the image capture unit 301, pixels at positions aligned with the pixels for which that reference histogram was generated (step S203). The extraction unit 304 compares the reference histogram with the pixel value of the identified pixel, and determines whether that pixel is in a detection target candidate region or in another region.

In the case in which a detection target such as foreign matter is included in the acquired image, the pixel values of the pixels indicating the detection target become pixel values similar to pixel values with low frequencies in the reference histogram generated based on images not including detection targets. Meanwhile, the pixel values of pixels not indicating detection targets become pixel values similar to pixel values with high occurrence frequencies in the reference histogram. Therefore, the extraction unit 304, for a pixel identified from an image in which a detection target is detected, compares the pixel value thereof with the reference histogram, and determines whether or not the identified pixel can be considered to be a detection target candidate region. Specifically, the extraction unit 304 determines whether or not the output frequency of the pixel value of the pixel identified from the image is lower than a frequency threshold value $\theta$ set in the reference histogram (step S204). When the pixel value of the pixel identified from the image is lower than the frequency threshold value $\theta$ set in the reference histogram, the extraction unit 304 determines that the pixel is a detection target candidate (step S205). On the other hand, when the pixel value of the pixel identified from the image is higher than the frequency threshold value $\theta$ set in the reference histogram, the extraction unit 304 determines that the pixel is not a detection target candidate because it is similar to an image including a detection target (step S206).

In the above-mentioned process in the extraction unit 304, the formula for determining whether or not each pixel $i \in \Omega$ in a newly captured image is a candidate region can be represented, using the reference histogram $h\_i$ stored in the histogram storage unit 303 and the pixel value $b\_i$ of one pixel $i$ of one image newly captured by the image capture unit 301, as follows:
when

$$h\_i(b\_i) > \theta, \delta\_i = 1;$$

when

$$h\_i(b\_i) < \theta, \delta\_i = 0.$$

In this case, when $\delta\_i = 1$, the pixel is in a candidate region, and when $\delta\_i = 0$, the pixel is in a region other than a candidate region. The extraction unit 304 outputs $\delta\_i = 0$ upon determining that $h\_i(b\_i) < \theta$, using the threshold value $\theta$ and the pixel value $bi$ of the pixel $i$. When $\delta\_i = 0$, this indicates that the pixel $i$ is a detection target candidate.

Additionally, the threshold value $\theta$ is a threshold value of the cumulative amount in a histogram when distinguishing between detection target candidate regions and other regions. The method for determining the threshold value $\theta$ will be further described. By making use of the fact that the transparent container 2 is rotating in a fixed direction, the cosine similarity between the rotation direction vector of the container and the optical flow of each pixel is determined. The extraction unit 304 sets the threshold value $\theta$ so that, when the cosine similarity becomes high, the threshold value becomes high, and when the cosine similarity becomes low, the threshold value becomes low. That is, the extraction unit 304, when the motion vector of each pixel is aligned with the container rotation direction, more readily responds that the pixel is a detection target candidate region, and when they are not aligned, becomes less likely to so respond. This makes use of the fact that optical flow tends to be able to be detected in the motion direction for detection targets in the transparent container 2, such as foreign matter and air bubbles, more easily than other regions that are not detection targets.

The extraction unit 304 determines, for all of the pixels in one acquired image, whether or not they are similarly detection target candidate regions (step S207). Additionally, the extraction unit 304 similarly determines, for all pixels in respective images sequentially generated by the image capture device 10, whether or not they are detection target candidate regions (step S208).

The difference detection unit 305 performs filtering on a group of detection target candidate regions obtained by the extraction unit 304 and extracts only pixels of candidate regions in which the brightness value has changed between successive frames (step S209). Since the transparent container 2 is undergoing rotational motion, foreign matter and air bubbles move together with the container inside the transparent container 2. For this reason, in the regions of foreign matter and air bubbles, there tend to be large differences in brightness values when taking the difference between successive frames. On the other hand, for pixels making up regions other than detection targets, the amount of change in the brightness value is small, even when the difference between successive frames is taken. For this reason, the difference detection unit 305 identifies candidate regions in which the brightness value has changed between frames by taking the difference between successive frames. Similar effects can be obtained even when the order of the detection target candidate region extraction process by the extraction unit 304 and the filtering process by the difference detection unit 305 is switched, or the processes may be executed in parallel.

The clustering unit 306, for pixels in detection target candidate regions detected in images processed by the extraction unit 304 and the difference detection unit 305, searches for linked pixels in eight neighboring pixels in the vicinity thereof, and if it is determined that the linked pixels are detection target candidate regions, integrates the candidate regions by clustering so as to be identified as a single candidate region (step S210).

The tracking determination unit 307 sequentially tracks candidate regions identified by the clustering unit 306 between successive frames, and when a sufficiently long trajectory has been obtained, determines that the trajectory is that of a detection target such as foreign matter or an air bubble.

In the tracking determination unit 307, tracking results are updated by associating respective candidate regions $c\_i \in C$ in a current frame with tracking results $t\_j \in T$ obtained up to the current frame. In this case, $C$ represents the set of candidate regions newly detected in the current frame and $T$ represents the set of tracking results obtained up to the current frame. The tracking results are updated by generating a weight matrix $M$, and using said weight matrix $M$ and the Hungarian algorithm to associate candidate regions having the same detection target trajectory between frames.

The weight matrix generation unit 401 in the tracking determination unit 307 generates the weight matrix $M$ based on respective weight information including weight information $\alpha$ obtained from the new trajectory weighting unit 402, weight information $\beta$ obtained from the position weighting unit 403, weight information $\gamma$ obtained from the size change weighting unit 404, and weight information $\delta$ obtained from the rotation direction weighting unit 405.

The new trajectory weighting unit 402 uses the weight information $\alpha$ so that, the longer the continuity of candidate regions identified as associated regions in multiple consecutive images from the past, the stronger the association is made between said candidate region in a last image among the multiple consecutive images and the candidate region in the next new image following the last consecutive image. In other words, the new trajectory weighting unit 402 uses the weight information $\alpha$ to update the weights included in the weight matrix $M$ generated by the weight matrix generation unit 401 so that, the longer the trajectory length indicated by the tracking results, the more preference is given to connect candidate regions in new images.

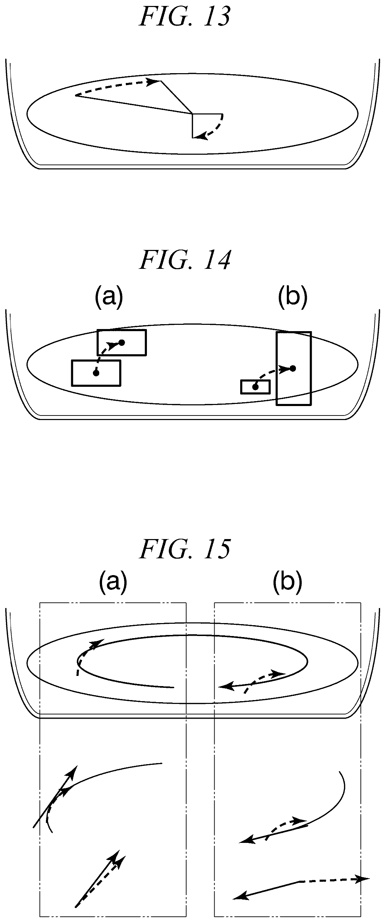

FIG. 13 is a first diagram indicating a summary of the processing in the image processing device according to the first embodiment.

The position weighting unit 403 uses the weight information $\beta$ so that the farther the distance of the position of a candidate region from the center of rotation in the transparent container 2 appearing in an image, even when the tracking results up to the $(N-1)$-th frame are distant from the candidate region in the $N$-th frame, the stronger the association is made between those candidate regions. Due to the rotation of the transparent container 2, for targets at positions more distant from the center of rotation, the distances between the positions at which they appear in successive images will be larger. Therefore, even if a target is far from the center of rotation and the positions at which it appears in successive images are distant from each other, it is preferable to determine that the trajectories thereof are connected. Therefore, the position weighting unit 403 uses the weight information $\beta$ to update the weights included in the weight matrix $M$ generated by the weight matrix generation unit 401 so that even candidate regions at positions at distances far from the center of rotation of the transparent container 2 can be preferentially connected with tracking results.

FIG. 14 is a second diagram indicating a summary of the processing in the image processing device according to the first embodiment.

The size change weighting unit 404 uses the weight information $\gamma$ so that the larger the change in shape of a candidate region including multiple pixels, the weaker the association is made between candidate regions in successive images. In the case in which the change in the shape of a candidate region is large, there is an increased likelihood that the relationship between the candidate regions in successive images is interrupted. Therefore, the size change weighting unit

EP 4 484 935 A1

404 uses the weight information $\gamma$ to update the weights so that, when there is a large difference equal to or greater than a prescribed threshold value between the number of pixels in a candidate region making up tracking results in an ($N$ - 1)-th frame and the number of pixels in a candidate region in an $N$-th frame, the association between the candidate region making up tracking results in the ($N$ - 1)-th frame and the candidate region in the $N$-th frame is made low. In FIG. 14(a), the change in the shape of the candidate region is small, and therefore, the association between successive images is high. In contrast therewith, in FIG. 14(b), there is a large change in the shape of the candidate region, and therefore, the association between successive images is low.

FIG. 15 is a third diagram indicating a summary of the processing in the image processing device according to the first embodiment.

The rotation direction weighting unit 405 uses the weight information $\delta$ so that, in each of successive images, the association between candidate regions moving opposite to the direction of rotation of the transparent container 2 is weakened. In other words, the rotation direction weighting unit 405 uses the weight information $\delta$ to update the weights so that the cosine similarities between rotation direction vectors of the container and center-of-gravity vectors from in-image positions of candidate regions in an ($N$ - 1)-th frame to in-image positions of respective candidate regions in an $N$-th frame are calculated, and those with low similarity are excluded. In FIG. 15(a), the directions of the rotation direction vectors (solid lines) and the directions of motion direction vectors (dotted lines) of the centers of gravity of detection target candidate regions are similar. Therefore, these are very likely to be detection target candidate regions. On the other hand, in FIG. 15(b), the directions of the rotation direction vectors (solid lines) and the directions of motion direction vectors (dotted lines) of the centers of gravity of detection target candidate regions are not similar. Therefore, these are not very likely to be detection target candidate regions.

The weight matrix generation unit 401 generates a weight matrix $M$ regarding the respective tracking results up to the ($N$ - 1)-th frame and the respective candidate regions in the $N$-th frame. The elements $m\_ij \in M$ of the weight matrix $M$ relating to the candidate regions $c\_i \in C$ appearing in the $N$-th frame and tracking results $t\_j \in T$ up to the ($N$ - 1)-th frame can be expressed by Equation (1). In Equation (1), the symbol "*" indicates multiplication.

$$m\_ij = (\lambda\_1 * \alpha + \lambda\_2 * \beta + \lambda\_3 * \gamma + \lambda\_4 * \delta)D\_ij \qquad \ldots (1)$$

In this case, $D\_ij$ represents the L2 norm of the center-of-gravity coordinates of the newest candidate region making up the tracking results $t\_j$ and the cluster $c\_i$. The weight information $\alpha$, $\beta$, $\gamma$, and $\delta$ represent the weights generated by the new trajectory weighting unit 402, the position weighting unit 403, the size change weighting unit 404, and the rotation direction weighting unit 405, and $\lambda\_1$, $\lambda\_2$, $\lambda\_3$, and $\lambda\_4$ represent weights adjusting the same.

Furthermore, the link determination unit 406 in the tracking determination unit 307 uses the weight matrix $M$ and the Hungarian algorithm to assign the candidate regions in the $N$-th frame to the tracking results in the ($N$ - 1)-th frame (step S211). As a result thereof, the respective candidate regions included in the $N$-th frame are classified into candidate regions not included in trajectories being tracked and candidate regions included in trajectories being tracked. The processing in the tracking determination unit 307 is one embodiment of a process for using candidate regions in successive images chronologically captured among multiple images and weight information (weight matrix $M$) indicating the level of continuity of candidate regions in those images to identify, as associated regions, candidate regions in the successive images. The link determination unit 406 records, in the unused region storage unit 407, pixel information regarding candidate regions not included in a trajectory being tracked in the images of the $N$ frames. For example, the link determination unit 406 records, in the unused region storage unit 407, identifiers of the images of the $N$ frames associated with identifiers of candidate regions not included in a trajectory being tracked, image information making up those candidate regions, etc. The link determination unit 406 records, in the existing trajectory storage unit 408, pixel information of candidate regions included in trajectories being tracked in the image of the $N$ frames. For example, the link determination unit 406 records, in the existing trajectory storage unit 408, identifiers of the images of the $N$ frames in association with identifiers of candidate regions included in trajectories being tracked, image information making up those candidate regions, etc.

The trajectory length determination unit 409 identifies candidate regions that are linked to a length equal to or greater than a prescribed threshold value, within the existing trajectory storage unit 408, as candidate regions for being detection targets such as foreign matter and air bubbles (step S212). For example, the trajectory length determination unit 409 calculates, based on the identifiers of the images of the $N$ frames, the identifiers of candidate regions included in trajectories being tracked, and the image information (such as pixel positions) making up those candidate regions, which are stored in the existing trajectory storage unit 408, the distance from the initial (i.e., in the image of a first frame) position of a candidate region to the position of the candidate region in the latest image (e.g., in the image of the $N$-th frame) indicating a trajectory. If this distance is equal to or greater than the threshold value, the trajectory length determination unit 409 identifies that the candidate region indicating the trajectory detected in the respective images from the first frame to the $N$-th frame is a candidate region for being a detection target such as foreign matter or air bubbles.

The recognition unit 308 acquires $N$ frames of images including information on one or multiple detection target candidate regions identified by the above-mentioned process in the tracking determination unit 307. The candidate region information includes, for example, information, etc. indicating pixels in the images. The recognition unit 308 uses the detection target candidate regions identified in each of the images of the N frames in the tracking determination unit 307 to determine whether the transparent container 2 is contaminated with matter that is a detection target. In this process, the recognition unit 308 uses the positions (in-image coordinates) of the detection target candidate regions in the images of the N frames to generate chronological tracking data. Additionally, the chronological tracking data may be data generated based on successive images among the images of the N frames generated by the link determination unit 406 in the tracking determination unit 307 during the link determination process. As mentioned above, the chronological tracking data may be, for example, information such as identifiers, positions (in-image coordinates), and numbers of pixels indicating detection target regions in chronologically successive images, and motion amounts and motion vectors based on variations in the positions of those regions in the successive image frames. The chronological tracking data may be generated once for the images of the N frames, or the chronological tracking data may be generated for each of the images of the N frames.

The classifier 506 in the recognition unit 308 generates respective square patch images including the candidate regions, centered on the candidate regions in the respective images of the N frames. The classifier 506 selects, from among the respective patch images corresponding to a single trajectory in the respective images of the N frames, based on the respective images of the N frames and the chronological tracking data, the patch image in which the candidate region is the smallest, the patch image in which the candidate region is the largest, and the patch image in which the range of the candidate region is closest to the average among the patch images in that trajectory. The classifier 506 inputs these selected patch images to the first learning model. As a result thereof, the classifier 506 outputs, for the respective patch images that have been input, first determination results indicating whether or not the candidate regions in those patch images are detection targets (step S213). The first determination results may be information regarding results indicating whether the patch images corresponding to one or multiple candidate regions included in an image are foreign matter or air bubbles, which are detection targets, or are other background regions. The first detection results may be information indicating whether or not the patch images corresponding to one or multiple candidate regions included in an image match correct detection targets used as training data. The classifier 506 similarly generates respective patch images indicating other trajectories in the respective images of the N frames based on chronological tracking data, inputs each of the selected patch images in the respective trajectories to the first learning model, and outputs first determination results indicating whether or not the candidate regions in those patch images are detection targets. When outputting that a patch image is a detection target in the first determination results, the classifier 506 records, in the recognition result storage unit 508, information indicating that the transparent container 2 contains foreign matter, which is a detection target. The classifier 506 may record patch images determined to be detection targets in the recognition result storage unit 508 in association with an identifier of a transparent container 2.

Additionally, the classifier 506 in the recognition unit 308 selects chronological tracking data corresponding to one trajectory in the respective images of the N frames. The classifier 506 inputs the selected chronological tracking data to the second learning model. As a result thereof, the classifier 506 outputs second determination results indicating whether or not the input chronological tracking data is a detection target (step S214). The classifier 506 similarly inputs chronological tracking data for other trajectories in the respective images of the N frames to the second learning model, and outputs second determination results indicating whether or not those trajectories are detection targets. When outputting that chronological tracking data is a detection target in the second determination results, the classifier 506 records, in the recognition result storage unit 508, information indicating that the transparent container 2 contains foreign matter, which is a detection target.

According to the processes described above, foreign matter accumulated at positions that are difficult to see due to the effects of refraction of light, such as at liquid surfaces and bottom surfaces, is rotated together with a transparent container 2, and the detection targets such as foreign matter accumulated near the liquid surface or the bottom surface can be more accurately detected by determining whether or not the characteristics of the motion of the detection targets such as foreign matter moving due to the rotation are characteristics of motion in accordance with the rotation.

<Second Embodiment>

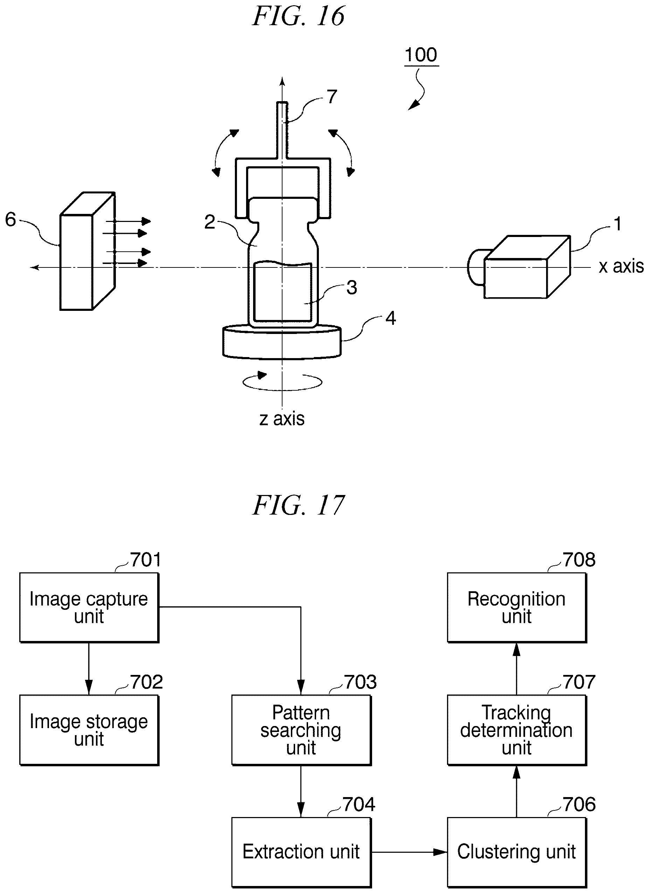

FIG. 16 is a fourth perspective view of a foreign matter detection device 100.

The foreign matter detection device 100, as indicated in FIG. 16, is composed of an image processing device 1, a transparent container 2 that is to be a detection target, a rotation device 4 for rotating the transparent container 2, transmitted illumination 6 for illuminating a liquid 3 inside the transparent container 2, and a shaking device 7 for shaking the transparent container 2. The liquid 3 is enclosed inside the transparent container 2.

In the second embodiment, the transparent container 2 has a cylindrical shape, and the medium enclosed inside the transparent container 2 is a liquid 3. Foreign matter that is a detection target has accumulated at the bottom surface of the liquid 3, and the image processing device 1 determines the presence or absence of foreign matter based on images that include foreign matter accumulated at the bottom surface of the liquid 3. The foreign matter that is the detection target may be accumulated at the liquid surface of the liquid 3, and the image processing device 1 may determine the presence or absence of foreign matter based on images that include foreign matter accumulated at the liquid surface of the liquid 3. The image processing device 1 may determine the types (foreign matter, air bubbles, etc.) of detection targets. The image processing device 1 may detect detection targets accumulated in a medium other than a liquid enclosed inside the transparent container 2. That is, the image processing device 1 may detect detection targets from images capturing detection targets accumulated at the bottom surface of the transparent container 2 or detection targets accumulated at surfaces at which a medium enclosed inside the transparent container 2 contacts another medium inside the transparent container 2. The image processing device 1 may detect detection targets from images capturing the detection targets accumulated at the bottom surface of the transparent container 2, or may detect detection targets from images capturing the detection targets accumulated at a top surface of the transparent container 2.

The rotation device 4 is a device that grips the bottom surface with the cylindrical transparent container 2 oriented vertically, and that rotates the transparent container 2 so that the axis of rotation ($z$ axis) is at a center aligned with the center of the bottom surface. Detection targets that are suspended, accumulated, etc. at the liquid surface, the liquid bottom, or within the liquid 3 enclosed inside the transparent container 2 rotate about the axis of rotation as the transparent container 2 is rotated. In the present embodiment, the image processing device 1 is provided with an image capture device 10. The image capture device 10 is installed at a position from which images of the detection targets can be captured, with the image capture direction fixed on an image capture axis ($x$ axis) orthogonal to the $z$ axis. While the rotation device 4 is rotating the transparent container 2, the image processing device 1 controls the image capture device 10 to capture images of the detection targets, and can obtain multiple consecutive images with angles of view in which the detection targets appear. While the image capture device 10 is capturing images, the relationship between the $z$ axis and the $x$ axis is maintained. As a result thereof, the image processing device 1 acquires multiple images containing the detection targets, the positions of which change as the rotation device 4 is rotated. In the second embodiment also, reflected illumination 5 may be used instead of the transmitted illumination 6, or both may be used.

Furthermore, the structural difference between the foreign matter detection devices 100 in the present embodiment and in the first embodiment is that the foreign matter detection device 100 of the second embodiment is provided with a shaking device 7, and the shaking device 7 shakes the transparent container 2 before applying rotation by means of the rotation device 4. In the second embodiment, the shaking device 7, for example, grips the upper portion of the transparent container 2 and shakes the transparent container 2 from left to right in the manner of a pendulum. As a result thereof, the positions of detection targets such as foreign matter accumulated in the liquid, at the liquid surface, and at the liquid bottom inside the shaking device 7 move. The image processing device 1 of the second embodiment detects detection targets by using multiple images of the transparent container 2 being rotated by the rotation device 4 before being shaken by the shaking device 7 and multiple images of the transparent container 2 being rotated by the rotation device 4 after being shaken by the shaking device 7.

FIG. 17 is a second diagram indicating functional blocks in the image processing device.

As indicated in FIG. 17, the image processing device 1 executes a prestored image processing program. As a result thereof, the image processing device 1 provides the respective functions of an image capture unit 701, an image storage unit 702, a pattern searching unit 703, an extraction unit 704, a clustering unit 706, a tracking determination unit 707, and a recognition unit 708.

The image capture unit 701 controls the image capture device 10 to acquire images generated by the image capture device 10 capturing images.

The image storage unit 702 stores the images that the image capture unit 701 has acquired from the image capture device 10.

The pattern searching unit 703 performs a process for matching patterns that change, between pre-shaking images and post-shaking images, under the influence of the reflection of light, etc. appearing in the images.

The extraction unit 704 uses respective images in which patterns have been matched between pre-shaking images and post-shaking images to extract candidate regions for being detection targets.

The clustering unit 706 clusters, as single candidate regions, groups of adjacent pixels among the pixels remaining as candidate regions.

The tracking determination unit 707 sequentially identifies, in the respective pixels of multiple successive images with different sequential image capture timings, successive associated regions that move in accordance with the rotation of the transparent container among the regions (detection windows) of the clustered candidate regions.

The recognition unit 708 recognizes detection targets by using first determination results obtained by using a first learning model and image information for candidate regions that move in a movement direction in accordance with the rotation to determine whether or not the candidate regions are the detection target, and second determination results obtained by using a second learning model and information indicating a chronological change in the candidate regions that move in the movement direction in accordance with the rotation to determine whether or not the candidate regions are the detection target. The recognition of the detection target is one embodiment of the process for determining the presence or absence of detection targets.

In the second embodiment, the respective functions of the clustering unit 706, the tracking determination unit 707, and the recognition unit 708 are similar to those in the first embodiment.

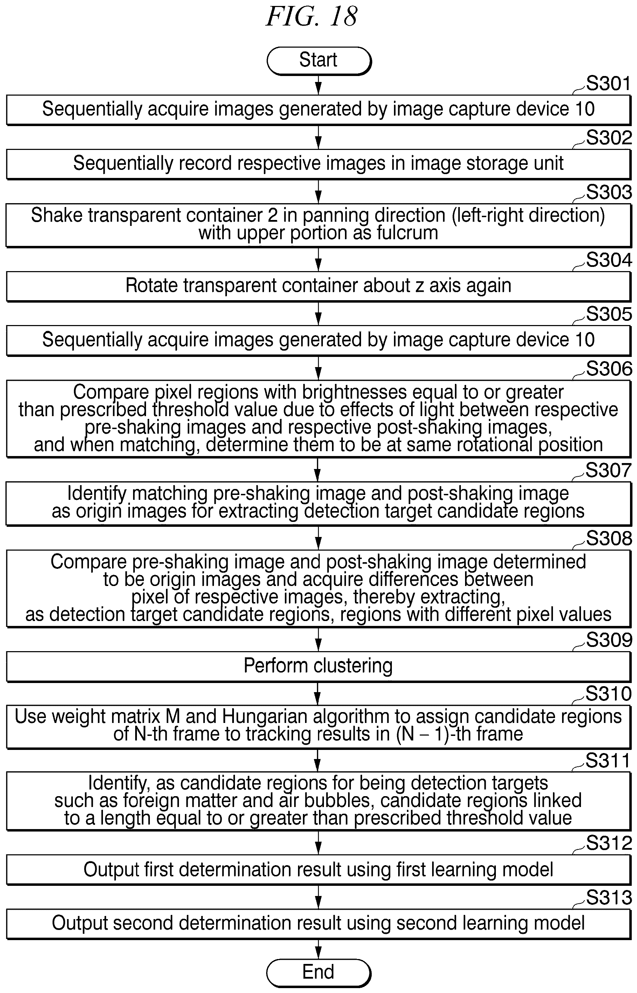

FIG. 18 is a diagram indicating the processing flow in the image processing device according to the second embodiment.

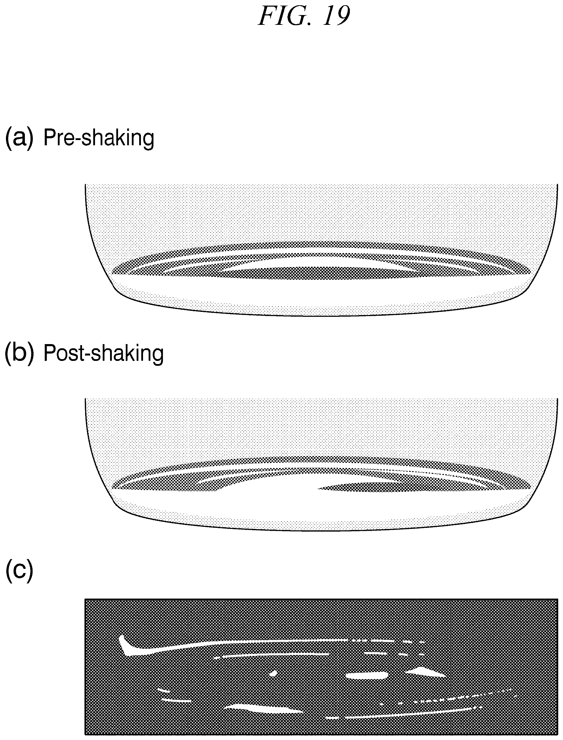

FIG. 19 is a diagram indicating a summary of the processing in the image processing device according to the second embodiment.

Next, the processing in the second embodiment when the image processing device 1 actually recognizes a detection target will be explained. As with the processing explained for the first embodiment, it is assumed that a first learning model and a second learning model have been generated.

First, the rotation device 4 rotates the transparent container 2 about the z axis. In this state, the image capture unit 701 of the image processing device 1 controls the image capture device 10 so as to continuously capture images. The image capture unit 701 sequentially acquires images (frames) generated by the image capture device 10 (step S301). The image capture unit 701 sequentially records the respective images that have been acquired in the image recording unit 702 (step S302). The respective images that have been recorded are pre-shaking images.

Next, based on control by the image processing device 1, the shaking device 7 shakes the transparent container 2 in a panning direction (left-right direction) with the upper portion thereof as a fulcrum (step S303). As a result thereof, the transparent container 2 is shaken in the panning direction (left-right direction) viewed from the image capture device 10. Alternatively, a manager may manually shake the transparent container 2 in the panning direction. Then, the rotation device 4 again rotates the transparent container 2 about the z axis (step S304). The image capture unit 701 in the image processing device 1 controls the image capture device 10 so as to continuously capture images. The image capture unit 701 sequentially acquires images (frames) generated by the image capture device 10 (step S305). These respective images are post-shaking images.

The pattern searching unit 703 in the image processing device 1 compares pixel regions having a brightness that is a prescribed threshold value or higher due to the effects of light in the respective pre-shaking images (FIG. 19(a)) and the respective post-shaking images (FIG. 19(b)), and when they match, determines the positions viewed from the image capture device 10 by rotation of the transparent container 2 to be the same rotational position (step S306). The pattern searching unit 703 may compare pixel regions having a brightness that is a prescribed threshold value or higher due to the effects of light in the respective pre-shaking images and the respective post-shaking images, and determine whether or not the images match by comparing regions with a brightness that is the prescribed threshold value or higher and determining those regions to be at the same position if a certain percentage of those regions match. The pattern searching unit 703 identifies the matched pre-shaking images and post-shaking images as origin images for extracting detection target candidate regions (step S307).

The extraction unit 704 compares the pre-shaking images and the post-shaking images determined to be origin images by the pattern searching unit 703 and takes the differences between the pixels in those images to extract, as detection target candidate regions (FIG. 19(c)), the regions in which the pixel values are different (step S308). As a result thereof, detection target candidate regions are distinguished from other background regions. The processing in this extraction unit 704 is an embodiment of a process for identifying regions with similar light reflection based on the differences between the respective pixels in a first image capturing the transparent container 2 with the image capture device 10 and a second image capturing the transparent container 2 with the image capture device 10 after having shaken the transparent container 2, and for extracting detection target candidate regions in which there are changes in pixel values based on the differences between the first image and the second image in which the regions with similar light reflection match.

The clustering unit 706, for pixels in detection target candidate regions detected in images processed by the extraction unit 704, searches for linked pixels in eight neighboring pixels in the vicinity thereof, and if it is determined that the linked pixels are detection target candidate regions, combines the candidate regions by clustering so as to be identified as a single candidate region (step S309).

The tracking determination unit 707 sequentially tracks candidate regions identified by the clustering unit 706 between successive frames, and when a sufficiently long trajectory has been obtained, determines that the trajectory is that of a detection target such as foreign matter or an air bubble.

In the tracking determination unit 707, tracking results are updated by associating respective candidate regions $c\_i \in C$ in a current frame with tracking results $t\_j \in T$ obtained up to the current frame. In this case, $C$ represents the set of candidate regions newly detected in the current frame and $T$ represents the set of tracking results obtained up to the current frame. The tracking results are updated by generating a weight matrix $M$ and using said weight matrix $M$ and the Hungarian algorithm to associate candidate regions having the same detection target trajectory between frames.

The weight matrix generation unit 401 in the tracking determination unit 707 generates the weight matrix $M$, as in the first embodiment, based on respective weight information including weight information $\alpha$ obtained from the new trajectory weighting unit 402, weight information $\beta$ obtained from the position weighting unit 403, weight information $\gamma$ obtained from the size change weighting unit 404, and weight information $\delta$ obtained from the rotation direction weighting unit 405.

The weight matrix generation unit 401 generates a weight matrix *M* regarding the respective tracking results up to the *(N-* 1)-th frame and the respective candidate regions in the *N*-th frame. The elements $m\_ij \in M$ of the weight matrix *M* relating to the candidate regions $c\_i \in C$ appearing in the *N*-th frame and tracking results $t\_j \in T$ up to the *(N* - 1)-th frame can be expressed by Equation (2). In Equation (1), the symbol "*" indicates multiplication.

$$m\_ij = (\lambda\_1 * \alpha + \lambda\_2 * \beta + \lambda\_3 * \gamma + \lambda\_4 * \delta)D\_ij \qquad \dots (2)$$

In this case, $D\_ij$ represents the L2 norm of the center-of-gravity coordinates of the newest candidate region making up the tracking results $t\_j$ and the cluster $c\_i$. The weight information $\alpha, \beta, \gamma,$ and $\delta$ represent the weights generated by the new trajectory weighting unit 402, the position weighting unit 403, the size change weighting unit 404, and the rotation direction weighting unit 405, and $\lambda\_1, \lambda\_2, \lambda\_3,$ and $\lambda\_4$ represent weights adjusting the same.

Furthermore, the link determination unit 406 in the tracking determination unit 707 uses the weight matrix *M* and the Hungarian algorithm to assign the candidate regions in the *N*-th frame to the tracking results in the *(N* - 1)-th frame (step S310). As a result thereof, the respective candidate regions included in the *N*-th frame are classified into candidate regions not included in trajectories being tracked and candidate regions included in trajectories being tracked. The link determination unit 406 records, in the unused region storage unit 407, pixel information regarding candidate regions not included in a trajectory being tracked in the images of the *N* frames. For example, the link determination unit 406 records, in the unused region storage unit 407, identifiers of the images of the *N* frames in association with identifiers of candidate regions not included in a trajectory being tracked, image information making up those candidate regions, etc. The link determination unit 406 records, in the existing trajectory storage unit 408, pixel information of candidate regions included in trajectories being tracked in the image of the *N* frames. For example, the link determination unit 406 records, in the existing trajectory storage unit 408, identifiers of the images of the *N* frames in association with identifiers of candidate regions included in trajectories being tracked, image information making up those candidate regions, etc.

The trajectory length determination unit 409 identifies candidate regions that are linked to a length equal to or greater than a prescribed threshold value, within the existing trajectory storage unit 408, as candidate regions for being detection targets such as foreign matter and air bubbles (step S311). For example, the trajectory length determination unit 409 calculates, based on the identifiers of the images of the *N* frames, the identifiers of candidate regions included in trajectories being tracked, and the image information (such as pixel positions) making up those candidate regions, which are stored in the existing trajectory storage unit 408, the distance from the initial (i.e., in the image of a first frame) position of a candidate region to the position of the candidate region in the latest image (e.g., in the image of the *N*-th frame) indicating a trajectory. If this distance is equal to or greater than the threshold value, the trajectory length determination unit 409 identifies that the candidate region indicating the trajectory detected in the respective images from the first frame to the *N*-th frame is a candidate region for being a detection target such as foreign matter or air bubbles.

The recognition unit 708 acquires *N* frames of images including information on one or multiple detection target candidate regions identified by the above-mentioned process in the tracking determination unit 707. The candidate region information includes, for example, information indicating pixels in the images, etc. The recognition unit 708 uses the detection target candidate regions identified in each of the images of the *N* frames in the tracking determination unit 707 to determine whether the transparent container 2 is contaminated with matter that is a detection target by the process indicated below. In this process, the recognition unit 708 uses the positions (in-image coordinates) of the detection target candidate regions in the images of the *N* frames to generate chronological tracking data. Additionally, the chronological tracking data may be data generated based on successive images among the images of the *N* frames generated by the link determination unit 406 in the tracking determination unit 707 during the link determination process. As mentioned above, the chronological tracking data may be, for example, information such as identifiers, positions (in-image coordinates), and numbers of pixels indicating detection target regions in chronologically successive images, and motion amounts and motion vectors based on variations in the positions of those regions in the successive image frames. The chronological tracking data may be generated once for the images of the *N* frames, or the chronological tracking data may be generated for each of the images of the *N* frames.

The classifier 506 in the recognition unit 708 generates respective square patch images including the candidate regions, centered on the candidate regions in the respective images of the *N* frames. The classifier 506 selects, from among the respective patch images corresponding to a single trajectory in the respective images of the *N* frames, based on the respective images of the *N* frames and the chronological tracking data, the patch image in which the candidate region is the smallest, the patch image in which the candidate region is the largest, and the patch image in which the range of the candidate region is closest to the average among the patch images in that trajectory. The classifier 506 inputs these selected patch images to the first learning model. As a result thereof, the classifier 506 outputs, for the respective patch images that have been input, first determination results indicating whether or not the candidate regions in those patch images are detection targets (step S312). The first determination results may be information regarding results indicating whether the patch images corresponding to one or multiple candidate regions included in an image are foreign matter or air bubbles, which are detection targets, or are other background regions. The first detection results may be information indicating whether or not the patch images corresponding to one or multiple candidate regions included in an image match correct detection targets used as training data. The classifier 506 similarly generates respective patch images indicating other trajectories in the respective images of the N frames based on chronological tracking data, inputs each of the selected patch images in the respective trajectories to the first learning model, and outputs first determination results indicating whether or not the candidate regions in those patch images are detection targets. When outputting that a patch image is a detection target in the first determination results, the classifier 506 records, in the recognition result storage unit 508, information indicating that the transparent container 2 contains foreign matter, which is a detection target. The classifier 506 may record patch images determined to be detection targets in the recognition result storage unit 508 in association with an identifier of a transparent container 2.

Additionally, the classifier 506 in the recognition unit 708 selects chronological tracking data corresponding to one trajectory in the respective images of the N frames. The classifier 506 inputs the selected chronological tracking data to the second learning model. As a result thereof, the classifier 506 outputs second determination results indicating whether or not the input chronological tracking data is a detection target (step S313). The classifier 506 similarly inputs chronological tracking data for other trajectories in the respective images of the N frames to the second learning model, and outputs second determination results indicating whether or not those trajectories are detection targets. When outputting that chronological tracking data is a detection target in the second determination results, the classifier 506 records, in the recognition result storage unit 508, information indicating that the transparent container 2 contains foreign matter, which is a detection target.

According to the processes described above, foreign matter accumulated at positions that are difficult to see due to the effects of refraction of light, such as at liquid surfaces and bottom surfaces, is rotated together with a transparent container 2, and the detection targets such as foreign matter accumulated near the liquid surfaces or bottom surfaces can be more accurately detected by determining whether or not the characteristics of the motion of the detection targets such as foreign matter moving due to the rotation are characteristics of motion in accordance with the rotation.

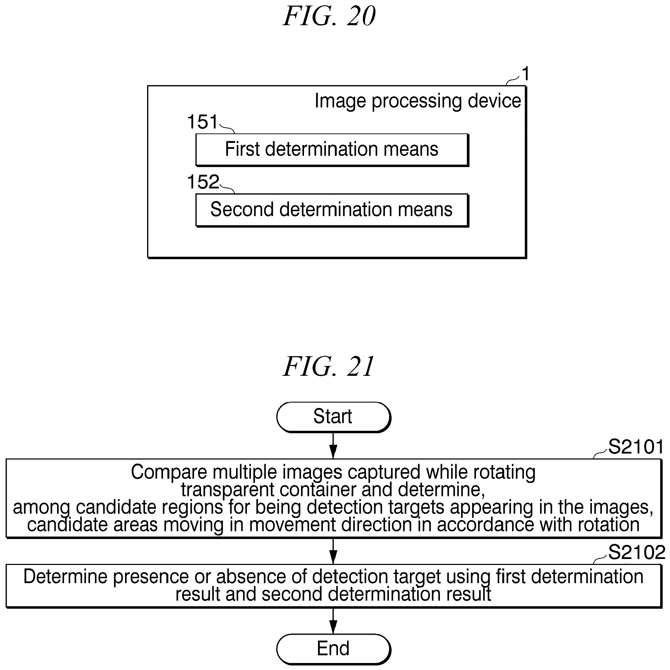

FIG. 20 is a diagram illustrating the minimum configuration of the image processing device.

FIG. 21 is a diagram indicating the processing flow in the image processing device with the minimum configuration.

The image processing device 1 is provided with at least a first determining means and a second determining means.

The first determining means compares multiple images capturing a detection target inside a transparent container 2, the images being captured while rotating the transparent container 2, and determines, among candidate regions for being the detection target appearing in the images, candidate regions that move in a movement direction in accordance with the rotation (step S2101).

The second determining means determines the presence or absence of the detection target by using first determination results obtained by using a first learning model and image information for the candidate regions that move in the movement direction in accordance with the rotation to determine whether or not the candidate regions are the detection target, and second determination results obtained by using a second learning model and information indicating a chronological change in the candidate regions that move in the movement direction in accordance with the rotation to determine whether or not the candidate regions are the detection target (step S2102).

The image processing device 1 described above has an internal computer system. Furthermore, the steps in the respective processes described above are stored in a computer-readable storage medium in the form of a program, and the processes described above are performed by a computer reading and executing this program. In this case, the computer-readable recording medium refers to a magnetic disk, a magneto-optic disk, a CD-ROM, a DVD-ROM, a semiconductor memory, or the like. Additionally, this computer program may be distributed to a computer by means of communication lines and the computer that has received this distribution may execute said program.

Additionally, the program described above may be for realizing just some of the aforementioned functions. Furthermore, it may be a so-called difference file (difference program) that can realize the aforementioned functions by being combined with a program already recorded in a computer system.

[Industrial Applicability]

The present invention can be applied to uses such as automated and high-speed implementation, as opposed to manual performance, of inspections regarding whether or not liquids such as medical drug products are contaminated with foreign matter or the like. Additionally, the present invention can also be used for inspecting whether beverages or the like are contaminated with foreign matter when producing the beverages.

Although some or all of the embodiments mentioned above may be described as in the appendices below, they are not limited to what is indicated below.

(Appendix 1)

An image processing device includes:

compares multiple images capturing a detection target inside a transparent container, the images being captured while rotating the transparent container, and determines, among candidate regions for being the detection target appearing in the images, candidate regions that move in a movement direction in accordance with the rotation; and determines a presence or absence of the detection target by using first determination results obtained by using a first learning model and image information for the candidate regions that move in the movement direction in accordance with the rotation to determine whether or not the candidate regions are the detection target, and second determination results obtained by using a second learning model and information indicating a chronological change in the candidate regions that move in the movement direction in accordance with the rotation to determine whether or not the candidate regions are the detection target.

(Appendix 2)

The image processing device according to appendix 1, provided with:
extraction means for extracting candidate regions for being the detection target in a newly acquired image by comparing pixel values of respective pixels of the newly acquired image with a reference histogram generated based on pixel values of respective pixels of the multiple images prepared in advance by fixing the image capture device of the images and rotating the transparent container.

(Appendix 3)

The image processing device according to appendix 2, provided with:
extraction means for identifying regions with similar light reflection based on differences between respective pixels in a first image captured by fixing the image capture device of the images and capturing the transparent container with the image capture device, and a second image capturing the transparent container with the image capture device after having shaken the transparent container, and extracting the candidate regions for being the detection target in which there is a change in the pixel values based on differences between the first image and the second image in which the regions with similar light reflection are matched.

(Appendix 4)

The image processing device according to any one of appendix 1 to appendix 3, provided with:

tracking determination means for identifying, in the multiple pixels, associated regions in accordance with movement of the candidate region based on rotation of the transparent container,
wherein the tracking determination means uses the candidate regions in chronologically successive images captured among the multiple images and weight information indicating a level of continuity of the candidate regions in those images to identify, as the associated regions, the candidate regions in the successive images.

(Appendix 5)

The image processing device according to appendix 4, wherein:
the weight information is information that, if the continuity of the candidate regions identified as the associated regions in multiple consecutive images from the past is long, increases the association between said candidate regions in a last image among the multiple consecutive images and the candidate regions in a new image following the last image.

(Appendix 6)

The image processing device according to appendix 4 or appendix 5, wherein:
the weight information is information that, for candidate regions at positions at a farther distance from the center of rotation of the transparent container captured in the image, increases the association of the candidate regions even when the candidate regions are distant from each other in successive images.

(Appendix 7)

The image processing device according to any one of appendix 4 to appendix 6, wherein:
the weight information is information that decreases the association of the candidate regions in each of the successive images based on there being a large change in a shape of the candidate regions including multiple pixels.

(Appendix 8)

The image processing device according to any one of appendix 4 to appendix 7, wherein:
the weight information is information that decreases the association of the candidate regions in each of the successive images that move opposite to the rotation direction of the transparent container.

(Appendix 9)

The image processing device according to any one of appendix 1 to appendix 8, wherein:
the images capture detection targets accumulated in a curved portion of a wall surface of the transparent container or detection targets accumulated at a surface at which a medium enclosed inside the transparent container contacts another medium inside the transparent container.

(Appendix 10)

An image processing method includes:

comparing multiple images capturing a detection target inside a transparent container, the images being captured while rotating the transparent container, and determining, among candidate regions for being the detection target appearing in the images, candidate regions that move in a movement direction in accordance with the rotation; and determining a presence or absence of the detection target by using first determination results obtained by using a first learning model and image information for the candidate regions that move in the movement direction in accordance with the rotation to determine whether or not the candidate regions are the detection target, and second determination results obtained by using a second learning model and information indicating a chronological change in the candidate regions that move in the movement direction in accordance with the rotation to determine whether or not the candidate regions are the detection target.

(Appendix 11)

A storage medium in which a program is stored for making a computer in an image processing device execute:

a process of comparing multiple images capturing a detection target inside a transparent container, the images being captured while rotating the transparent container, and determining, among candidate regions for being the detection target appearing in the images, candidate regions that move in a movement direction in accordance with the rotation; and
a process of determining a presence or absence of the detection target by using first determination results obtained by using a first learning model and image information for the candidate regions that move in the movement direction in accordance with the rotation to determine whether or not the candidate regions are the detection target, and second determination results obtained by using a second learning model and information indicating a chronological change in the candidate regions that move in the movement direction in accordance with the rotation to determine whether or not the candidate regions are the detection target.

[Reference Signs List]

| 1 | Image processing device |
|---|---|
| 2 | Transparent container |
| 4 | Rotation device |
| 5 | Reflected illumination |
| 6 | Transmitted illumination |
| 7 | Shaking device |

| 301, 701 | Image capture unit |
| 302 | Histogram generation unit |
| 303 | Histogram storage unit |
| 304, 704 | Extraction unit |
| 305, 705 | Difference detection unit |
| 306, 706 | Clustering unit |
| 307, 707 | Tracking determination unit |
| 308, 708 | Recognition unit |
| 702 | Image storage unit |
| 703 | Pattern searching unit |
| 401 | Weight matrix generation unit |
| 402 | New trajectory weighting unit |
| 403 | Position weighting unit |
| 404 | Size change weighting unit |
| 405 | Rotation direction weighting unit |
| 406 | Link determination unit |
| 407 | Unused region storage unit |
| 408 | Existing trajectory storage unit |
| 409 | Trajectory length determination unit |
| 501 | Simulated texture storage unit |
| 502 | Synthesized target image generation unit |
| 503 | Chronological tracking data storage unit |
| 504 | Real image storage unit |
| 505 | Synthesized target image storage unit |
| 506 | Classifier |
| 507 | Learning unit |
| 508 | Recognition result storage unit |

**Claims**

1. An image processing device comprising:

   compares multiple images capturing a detection target inside a transparent container, the images being captured while rotating the transparent container, and determines, among candidate regions for being the detection target appearing in the images, candidate regions that move in a movement direction in accordance with the rotation; and

   determines a presence or absence of the detection target by using first determination results obtained by using a first learning model and image information for the candidate regions that move in the movement direction in accordance with the rotation to determine whether or not the candidate regions are the detection target, and second determination results obtained by using a second learning model and information indicating a chronological change in the candidate regions that move in the movement direction in accordance with the rotation to determine whether or not the candidate regions are the detection target.

2. The image processing device according to claim 1, provided with:
   extraction means for extracting candidate regions for being the detection target in a newly acquired image by comparing pixel values of respective pixels of the newly acquired image with a reference histogram generated based on pixel values of respective pixels of the multiple images prepared in advance by fixing the image capture device of the images and rotating the transparent container.

3. The image processing device according to claim 2, provided with:
   extraction means for identifying regions with similar light reflection based on differences between respective pixels in a first image captured by fixing the image capture device of the images and capturing the transparent container with the image capture device, and a second image capturing the transparent container with the image capture device after having shaken the transparent container, and extracting the candidate regions for being the detection target in which there is a change in the pixel values based on differences between the first image and the second image in which the regions with similar light reflection are matched.

4. The image processing device according to any one of claim 1 to claim 3, provided with:

tracking determination means for identifying, in the multiple pixels, associated regions in accordance with movement of the candidate region based on rotation of the transparent container,

wherein the tracking determination means uses the candidate regions in chronologically successive images captured among the multiple images and weight information indicating a level of continuity of the candidate regions in those images to identify, as the associated regions, the candidate regions in the successive images.

5. The image processing device according to claim 4, wherein:
the weight information is information that, if the continuity of the candidate regions identified as the associated regions in multiple consecutive images from the past is long, increases the association between said candidate regions in a last image among the multiple consecutive images and the candidate regions in a new image following the last image.

6. The image processing device according to claim 4 or claim 5, wherein:
the weight information is information that, for candidate regions at positions at a farther distance from the center of rotation of the transparent container captured in the image, increases the association of the candidate regions even when the candidate regions are distant from each other in successive images.

7. The image processing device according to any one of claim 4 to claim 6, wherein:
the weight information is information that decreases the association of the candidate regions in each of the successive images based on there being a large change in a shape of the candidate regions including multiple pixels.

8. The image processing device according to any one of claim 4 to claim 7, wherein:
the weight information is information that decreases the association of the candidate regions in each of the successive images that move opposite to the rotation direction of the transparent container.

9. The image processing device according to any one of claim 1 to claim 8, wherein:
the images capture detection targets accumulated in a curved portion of a wall surface of the transparent container or detection targets accumulated at a surface at which a medium enclosed inside the transparent container contacts another medium inside the transparent container.

10. An image processing method comprising:

comparing multiple images capturing a detection target inside a transparent container, the images being captured while rotating the transparent container, and determining, among candidate regions for being the detection target appearing in the images, candidate regions that move in a movement direction in accordance with the rotation; and

determining a presence or absence of the detection target by using first determination results obtained by using a first learning model and image information for the candidate regions that move in the movement direction in accordance with the rotation to determine whether or not the candidate regions are the detection target, and second determination results obtained by using a second learning model and information indicating a chronological change in the candidate regions that move in the movement direction in accordance with the rotation to determine whether or not the candidate regions are the detection target.

11. A storage medium in which a program is stored for making a computer in an image processing device execute:

a process of comparing multiple images capturing a detection target inside a transparent container, the images being captured while rotating the transparent container, and determining, among candidate regions for being the detection target appearing in the images, candidate regions that move in a movement direction in accordance with the rotation; and

a process of determining a presence or absence of the detection target by using first determination results obtained by using a first learning model and image information for the candidate regions that move in the movement direction in accordance with the rotation to determine whether or not the candidate regions are the detection target, and second determination results obtained by using a second learning model and information indicating a chronological change in the candidate regions that move in the movement direction in accordance with the rotation to determine whether or not the candidate regions are the detection target.

EP 4 484 935 A1

*FIG. 1*

100

Reflected
illumination

2

5

6

3

x axis

Transmitted
illumination

Image processing
device

1

4

z axis

*FIG. 2*

100

Reflected
illumination

2

5

3

1

Image processing
device

4

21

*FIG. 3*

100

6 → Transmitted illumination

2

3

4

1 → Image processing device

*FIG. 4*

42

41

(4b)

(4a)

## FIG. 5

51

(5a)

## FIG. 6

1
Image processing device

101
CPU

102
ROM

103
RAM

104
HDD

105
Image capture device

10
Communication module

## FIG. 7

```
[301 Image capture unit]
    ↓
[302 Histogram generation unit]
    ↓
[303 Histogram storage unit] → [304 Extraction unit] → [305 Difference detection unit] → [306 Clustering unit]

[301 Image capture unit] → [304 Extraction unit]

[307 Tracking determination unit] ← [306 Clustering unit]
[308 Recognition unit] ← [307 Tracking determination unit]
```

## FIG. 8

```
[306 Clustering unit]
    ↓
307 Tracking determination unit
    [402 New trajectory weighting unit]
    [403 Position weighting unit] → [401 Weight matrix generation unit]
    [404 Size change weighting unit]
    [405 Rotation direction weighting unit]
    [401 Weight matrix generation unit] ↓ [406 Link determination unit]
    [406 Link determination unit] —YES→ [408 Existing trajectory storage unit]
    [406 Link determination unit] —NO→ [407 Unused region storage unit]
    [409 Trajectory length determination unit] → [308 Recognition unit]
    [408 Existing trajectory storage unit] → [409 Trajectory length determination unit]
```

## FIG. 9

Tracking determination unit — 307

Recognition unit — 308

Training data

Chronological tracking data storage unit — 503

Simulated texture storage unit — 501

Real image storage unit — 504

Classifier — 506

Recognition result storage unit — 508

Synthesized target image generation unit — 502

Synthesized target image storage unit — 505

Learning unit — 507

## FIG. 10

Start

Sequentially acquire images (1, 2, ..., N frames) — S101

Generate, for all pixels in images, reference histograms with histogram generation ranges a, based on respective pixels in respective histogram generation ranges a at same in-image positions for multiple images — S102

End

## FIG. 11

Start

S201
Acquire one image (one frame)

S202
Acquire reference histogram generated for one pixel

S203
Identify, in newly acquired image,
pixel at position matching pixel in target for which reference histogram generated

S204
Determine whether or not pixel value of pixel identified from image is lower
than threshold value $\theta$ of frequency set in reference histogram

S205
If pixel value of identified pixel is lower than threshold value $\theta$ of frequency set
in reference histogram, determine that pixel to be detection target candidate

S206
If pixel value of identified pixel is higher than threshold value $\theta$ of frequency set
in reference histogram, determine that pixel to not be detection target candidate

S207
NO    Has determination whether or not pixels
are detection target candidate regions been similarly performed for
all pixels in one acquired image?

YES

S208
NO    Has similar
determination been made for all pixels in
each image?

YES

S209
Extract only pixels of candidate regions
in which brightness value changes between successive frames

S210
Perform clustering

S211
Use weight matrix M and Hungarian algorithm to assign candidate regions of
N-th frame to tracking results in (N − 1)-th frame

S212
Identify, as candidate regions for being detection targets such as foreign matter and air bubbles,
candidate regions linked to a length equal to or greater than prescribed threshold value

S213
Output first determination result using first learning model

S214
Output second determination result using second learning model

End

*FIG. 12*

(1, 2, ···, N frames)

time (0~t)

a

< Reference histogram >

Frequency

Pixel value

0

255

Frequency

Pixel value

0

255

200

θ

(Pixel identified from image)

## FIG. 13

## FIG. 14

(a)                    (b)

## FIG. 15

(a)                    (b)

## FIG. 16

## FIG. 17

## FIG. 18

```
┌─────────────┐
│    Start    │
└─────────────┘
```

S301
Sequentially acquire images generated by image capture device 10

S302
Sequentially record respective images in image storage unit

S303
Shake transparent container 2 in panning direction (left-right direction) with upper portion as fulcrum

S304
Rotate transparent container about z axis again

S305
Sequentially acquire images generated by image capture device 10

S306
Compare pixel regions with brightnesses equal to or greater than prescribed threshold value due to effects of light between respective pre-shaking images and respective post-shaking images, and when matching, determine them to be at same rotational position

S307
Identify matching pre-shaking image and post-shaking image as origin images for extracting detection target candidate regions

S308
Compare pre-shaking image and post-shaking image determined to be origin images and acquire differences between pixel of respective images, thereby extracting, as detection target candidate regions, regions with different pixel values

S309
Perform clustering

S310
Use weight matrix M and Hungarian algorithm to assign candidate regions of N-th frame to tracking results in (N − 1)-th frame

S311
Identify, as candidate regions for being detection targets such as foreign matter and air bubbles, candidate regions linked to a length equal to or greater than prescribed threshold value

S312
Output first determination result using first learning model

S313
Output second determination result using second learning model

```
┌─────────────┐
│     End     │
└─────────────┘
```

*FIG. 19*

(a) Pre-shaking

(b) Post-shaking

(c)

## FIG. 20

Image processing device ~1

151~

First determination means

152~

Second determination means

## FIG. 21

Start

S2101

Compare multiple images captured while rotating
transparent container and determine,
among candidate regions for being detection targets appearing in the images,
candidate areas moving in movement direction in accordance with rotation

S2102

Determine presence or absence of detection target using first determination
result and second determination result

End

## INTERNATIONAL SEARCH REPORT

| International application No. |
|---|
| **PCT/JP2022/007601** |

### A. CLASSIFICATION OF SUBJECT MATTER

*G01N 21/90*(2006.01)i
FI:   G01N21/90 D

According to International Patent Classification (IPC) or to both national classification and IPC

### B. FIELDS SEARCHED

Minimum documentation searched (classification system followed by classification symbols)

G01N 21/00-21/01, 21/17-21/61, 21/84-21/958, G06N 20/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2006-214890 A (M I L KK) 17 August 2006 (2006-08-17)<br>claims 1, 5, paragraphs [0001], [0003], [0005], [0007], [0018], [0019], fig. 1-5 | 1-11 |
| Y | JP 2021-50959 A (SYSTEM SQUARE INC.) 01 April 2021 (2021-04-01)<br>paragraphs [0021], [0038]-[0047] | 1-11 |
| Y | JP 2020-183917 A (ANRITSU CORP.) 12 November 2020 (2020-11-12)<br>paragraphs [0007], [0039]-[0044], fig. 3-5 | 2-3 |
| Y | JP 2001-59822 A (FUJI ELECTRIC CO., LTD.) 06 March 2001 (2001-03-06)<br>paragraphs [0005]-[0007], fig. 2, 3 | 3 |
| Y | JP 2003-329604 A (SUKIYAN TECHNOLOGY KK) 19 November 2003 (2003-11-19)<br>paragraph [0016] | 9 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 April 2022** | **17 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/007601**

| Patent document cited in search report | | | Publication date (day/month/year) | Patent family member(s) | Publication date (day/month/year) |
|---|---|---|---|---|---|
| JP | 2006-214890 | A | 17 August 2006 | (Family: none) | |
| JP | 2021-50959 | A | 01 April 2021 | (Family: none) | |
| JP | 2020-183917 | A | 12 November 2020 | (Family: none) | |
| JP | 2001-59822 | A | 06 March 2001 | (Family: none) | |
| JP | 2003-329604 | A | 19 November 2003 | US 2003/0210397 A1<br>paragraph [0026] | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013044688 A
- JP 11125604 A
- JP 2004354100 A
- JP 2009264915 A